# EUROPEAN PATENT SPECIFICATION

(11) **EP 2 903 892 B1**
(45) Date of publication and mention of the grant of the patent: **02.05.2018**
(21) Application number: 13763040.6
(22) Date of filing: 13.09.2013
(51) Int. Cl.: B64C 1/26, B64C 39/02, B64C 39/10

(54) **AIRCRAFT WITH DETACHABLE WINGS**
FLUGZEUG MIT ABNEHMBAREN FLÜGELN
AÉRONEF À AILES AMOVIBLES

(30) Priority: 03.10.2012 EP 12187089; 04.10.2012 US 201261709343 P
(43) Date of publication of application: 12.08.2015
(73) Proprietor: Sensefly S.A., 1033 Cheseaux-sur-Lausanne (CH)
(72) Inventor: BEYELER, Antoine, CH-1004 Lausanne (CH); KLAPTOCZ, Adam, CH-1004 Lausanne (CH); ROBERTS, James F., Stokers Siding New South Wales 2484 (AU); ZIMMERMANN, Loic, CH-1030 Bussigny (CH); ZUFFEREY, Jean-Christophe, CH-1037 Etagnières (CH); LAZZARATTO-PINÖSCH, Andreas, 74580 Viry (FR)
(74) Representative: Wenger, Joel-Théophile
(86) International application number: PCT/EP2013/068994
(87) International publication number: WO 2014/053298

(56) References cited:
- US-A- 1 884 909
- US-A- 2 601 962
- US-A- 4 591 114
- US-A1- 2007 102 588
- US-A1- 2007 267 541
- US-A1- 2008 217 470

## Description

### INTRODUCTION

This invention relates in general to aircraft that have removable wings. More specifically, the invention relates to the connection set between the wings and the central body that enables transfer of forces and torques between the wings and control surfaces and the central body and servo-motors.

### BACKGROUND ART

Aircraft with removable wings are well known in the state of the art. Aircraft use the airflow over their wings to create lift when flying forwards. Though there are many ways of controlling the direction of an aircraft, the most common is to use control surfaces (such as ailerons or elevons) on the trailing edge of a wing. These control surfaces are generally actuated using servo-motors.

Radio-controlled model aircraft are commonly used by hobbyists for entertainment, and are increasingly outfitted with cameras for aerial photography. In the professional market, autonomous aircraft with on-board sensing and computation are increasingly being used for aerial photogrammetry, mapping and surveillance, with many more applications arising as the technology matures. Some of these aircraft feature wings that can be mechanically attached and detached from the central body of the aircraft.

Aircraft generally implement removable wings for two purposes. First, removable wings enable easier storage and transportation of the aircraft by separating the aircraft into three individual pieces. Second, removable wings can facilitate repair of the aircraft. Collisions between the aircraft and the ground or other obstacles can often damage the wings. Aircraft with removable wings can be easily returned to service by replacing a damaged wing without having to repair the entire aircraft.

Current designs of aircraft with removable wings have the servo-motor controlling their control surfaces embedded directly within the wing. This servo-motor must be connected to the central body that contains the rest of the flight electronics, generally through a cable. This configuration has several disadvantages. First, the cable must be connected and disconnected every time the wings are attached and detached. This complicates the wing attachment and detachment process, and continued use can wear down and damage the connector. Second, in case of a crash in which the wing is damaged and torn off the central body, the cable may be torn out of the central body, requiring repair of both the wing and the central body. Third, including the servo-motor within the wing significantly increases the cost of the wing and thus its replacement cost in case of damage.

It is therefore desirable to place expensive components such as the servo-motors within the central body to simplify the attachment and detachment process, reduce the wear on connectors and to reduce the replacement cost of the wings in case of damage. Separating the servo-motors from the control surfaces that they actuate, however, requires a special torque coupling mechanism between the two components that can be easily attached and detached yet still accurately transfer torque between them.

Some model aircraft (in particular model gliders) are built with their servo-motors embedded within the central body. The servo-motors are generally attached to the control surfaces through complex torque coupling mechanisms. In current implementations a wing is attached to a central body by first engaging an attachment mechanism for the wing. The torque coupling mechanism must then be engaged through a separate action, which generally takes the form of a screw, a clip or other mechanical connection mechanism within the central body that must be fastened in a separate motion after the wing is engaged. This engagement and disengagement process has several disadvantages. First, mechanically fixing the torque coupling mechanism with a fastener within the central body can cause damage to the central body in the case of a crash that tears the wing off the aircraft. Second, separating the process into two or more actions is more time consuming and increases the time required to launch the aircraft into the air.

It is thus desirable to create a connection set between the wings and the central body of an aircraft that can be engaged and disengaged in a single motion and that is designed to not damage the central body in the case of a crash that damages a wing.

### SUMMARY OF THE INVENTION

The current invention is directed at an aircraft that includes a connection set used to attach and transfer forces and torques between the aircraft's central body and a removable wing. More specifically, the connection set comprises two mechanisms: an attachment mechanism and a torque coupling mechanism.

According to the invention, the aircraft includes a central body, at least a wing and a connection set to attach the wing to the central body, said wing comprising a lifting surface and a control surface connected together by a hinge, said central body comprising at least a servo-motor to actuate the control surface of the wing, said connection set comprising:
an attachment mechanism between the wing and the central body; and
a torque coupling mechanism, comprising a first part which is the edge or a reinforcement of the edge of the wing, and a second part, mounted to the servo-motor of the central body, the first part and the second part being freely engaged together while the wing is attached to the central body.

In one embodiment the aircraft is comprised of a central body and two removable wings. Each wing is made up of a lifting surface and a control surface, such as an aileron or elevon, attached together using a hinge. The central body contains the battery, flight motor used for thrust, all electronics required for flight and, most importantly, the servo-motors used to actuate the control surfaces. The wings are connected to the central body through a connection set comprised of two separate components. First, an attachment mechanism between the wing and the central body ensures the mechanical coupling and the transmission of the constraints between the wing and the central body. Second, a torque coupling mechanism between the servo-motor contained within the central body and the control surface on the wing is used to actuate the control surface by transferring the torque of the servo-motor to it.

Some model aircraft (in particular model gliders) are built with their servo-motors embedded within the central body. The servo-motors are generally attached to the control surfaces through complex torque coupling mechanisms. In current implementations a wing is attached to a central body by first engaging an attachment mechanism for the wing. The torque coupling mechanism must then be engaged through a separate action, which generally takes the form of a screw, a clip or other mechanical connection mechanism within the central body that must be fastened in a separate motion after the wing is engaged. This engagement and disengagement process has several disadvantages. First, mechanically fixing the torque coupling mechanism with a fastener within the central body can cause damage to the central body in the case of a crash that tears the wing off the aircraft. Second, separating the process into two or more actions is more time consuming and increases the time required to launch the aircraft into the air.

It is thus desirable to create a connection set between the wings and the central body of an aircraft that can be engaged and disengaged in a single motion and that is designed to not damage the central body in the case of a crash that damages a wing.

The document US2007/0102588 describes a solution in which a servo is mounted into a servo case to activate a control surface of an aircraft. The servo case remains fixed relative to the airframe, while the shaft rotates with the control surface. The only intermediary mechanism between the servo and control surface is a coupler. The coupler can be either rigid, or one allowing for slight misalignment between the shaft and control surface.

### SUMMARY OF THE INVENTION

The current invention is directed at an aircraft that includes a connection set used to attach and transfer forces and torques between the aircraft's central body and a removable wing. More specifically, the connection set comprises two mechanisms: an attachment mechanism and a torque coupling mechanism.

According to the invention, it is proposed an aircraft including a central body, at least a wing and a connection set to attach the wing to the central body, said wing comprising a lifting surface and a control surface connected together by a hinge, said central body comprising at least a servo-motor to actuate the control surface of the wing, said connection set comprising:
an attachment mechanism between the wing and the central body; and
a torque coupling mechanism, characterized in that, the torque coupling mechanism comprises a first part which is the edge or a reinforcement of the edge of the wing, and a second part, mounted to the servo-motor of the central body so that the tilt angle of the control surface is in a one-to-one relationship with the rotation angle of the servo-motor, the first part and the second part being slidably freely engaged together while the wing is attached to the central body so that the first part remains detachable for the second part,
the axis of the servo-motor is aligned with the hinge of the control surface when the torque coupling mechanism is engaged, so that the control surface is directly actuated by the servo-motor through the first and second parts of the torque coupling mechanism;
wherein is the wing comprises bars and the central body comprises receptacles for the bars, the attachment between the wing and the central body been made by sliding the bars into the receptacles.

In one embodiment the aircraft is comprised of a central body and two removable wings. Each wing is made up of a lifting surface and a control surface, such as an aileron or elevon, attached together using a hinge. The central body contains the battery, flight motor used for thrust, all electronics required for flight and, most importantly, the servo-motors used to actuate the control surfaces. The wings are connected to the central body through a connection set comprised of two separate components. First, an attachment mechanism between the wing and the central body ensures the mechanical coupling and the transmission of the constraints between the wing and the central body. Second, a torque coupling mechanism between the servo-motor contained within the central body and the control surface on the wing is used to actuate the control surface by transferring the torque of the servo-motor to it.

The axis of the servo-motor is preferably aligned with the hinge of the control surface, so that the control surface is directly actuated by the servo-motor through the first and second parts of the torque coupling mechanism. The connection set is specifically designed so that both the attachment and torque coupling mechanisms are engaged and disengaged in a single motion. In addition, the connection set is designed to disengage without damaging the central body in case of a crash that impacts the wing.

### BRIEF DESCRIPTION OF THE DRAWINGS

The invention will be better understood, and other aspects and features of the invention will become apparent through the following description of the preferred embodiment taken in conjunction with the accompanying drawings.

Preferred embodiments will now be described, in terms of example only, with reference to the following figures, wherein:
FIG. 1a is a top view of a sample aircraft with wings detached;
FIG. 1b is a top view of the same aircraft with wings attached;
FIG. 2 is a detailed view of the connection set between the central body and a wing;
FIG. 3 is an exploded view of the torque-transfer connection set between the central body and the wing;

### DETAILED DESCRIPTION OF THE PREFERRED EMBODIMENTS

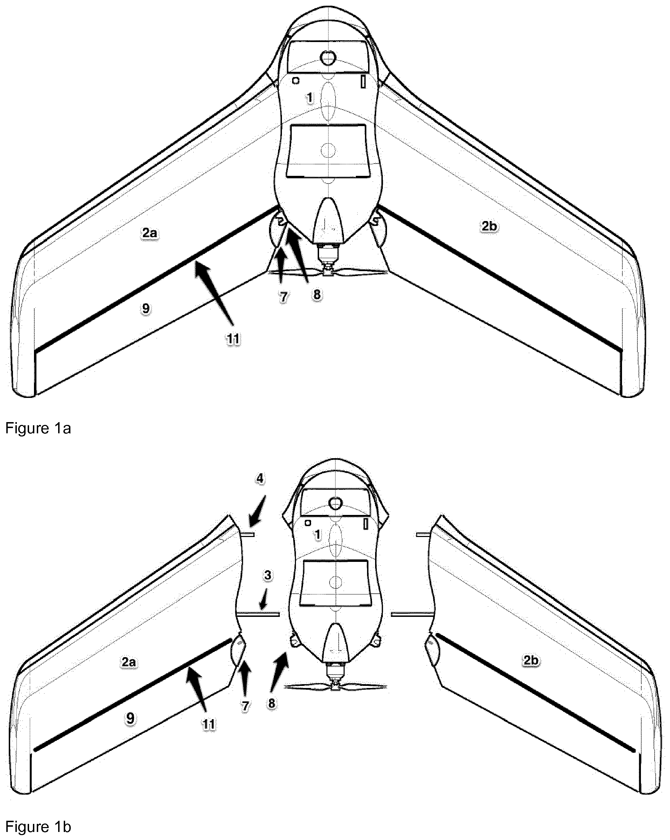

FIGS. 1a and 1b illustrate an aircraft comprised of a central body **(1)** and two detachable wings **(2a, 2b).** In FIG. 1a the wings **(2a, 2b)** are shown detached from the central body **(1),** clearly showing the attachment mechanism **(3-6)** and the torque coupling mechanism **(7-8).** In FIG. 1b the wings **(2a, 2b)** are attached to the central body **(1).**

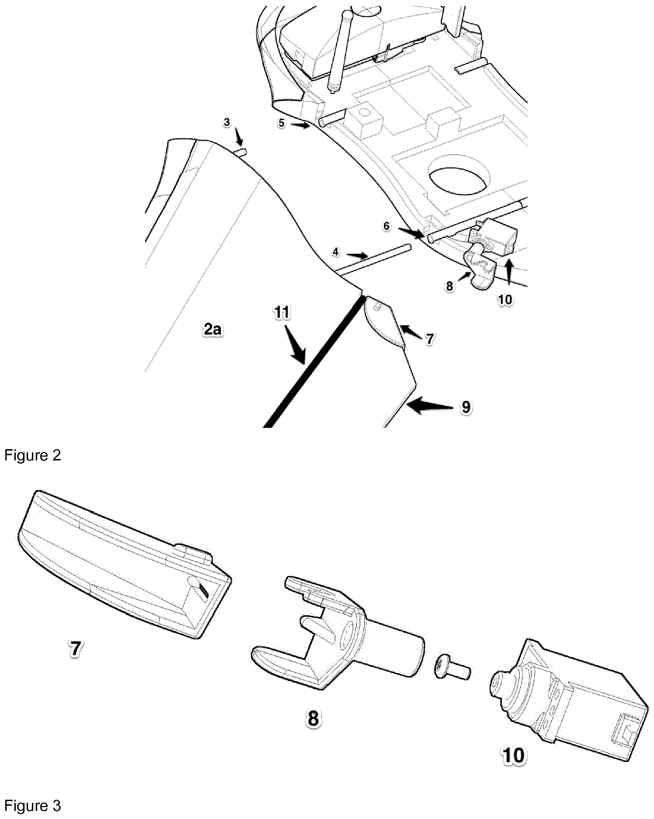

The first part of the connection set is the attachment mechanism **(3-6).** In this embodiment, the attachment mechanism **(3-6)** takes the form of two cylindrical bars **(3, 4)** fixed to each wing **(2a, 2b)** and two cylindrical receptacles **(5, 6)** for each wing **(2a, 2b)** within the central body **(1).** The cylindrical bars **(3,4)** must be aligned and then slid into the receptacles **(5, 6)** to attach the wing **(2a, 2b)** to the central body **(1).** Using two bars instead of a single bar increases the stiffness of the attachment mechanism **(3-6)** and prevents the wing **(2a, 2b)** from rotating around the attachment point. The length, thickness and material strength is selected to ensure that the connection between wing **(2a, 2b)** and central body **(1)** is stiff enough to withstand the aerodynamic forces acting on the wing **(2a, 2b)** during flight. An added advantage of such an attachment mechanism **(3-6)** is that it auto-aligns the wing **(2a, 2b)** with respect to the central body **(1).** FIG. 2 illustrates a cross-section of the central body **(1),** revealing the cylindrical receptacles **(5, 6)** of the attachment mechanism **(3-6)** within the central body **(1).**

As an extension to this embodiment, the two cylindrical bars **(3, 4),** along with their associated cylindrical receptacles, can be made of different diameters. This has the advantage of preventing the wing **(2a, 2b)** from being mounted incorrectly on the central body **(1).** Another extension to this embodiment is to use different lengths of cylindrical bars **(3, 4)** and associated cylindrical receptacles **(5, 6),** once again with the goal of preventing the wing **(2a, 2b)** from being mounted incorrectly to the central body **(1).**

An alternate embodiment of the attachment mechanism **(3-6)** can be bars and slots of any shape, including square and half-moon bars. Using a single half-moon bar, for example, can be used to both hold the wing **(2a, 2b)** in place and align it with respect to the central body **(1),** as a half-moon bar is not free to rotate within a half-moon receptacle.

In yet another alternate embodiment, the attachment mechanism **(3-6)** may take the form of a clip on the wing **(2a, 2b)** and a slot in the central body **(1)** which mate together, matching magnets in the wing **(2a, 2b)** and central body **(1),** or any other fastening technology.

The wing comprises means of identification to cooperate with means to read the identification located in the central body. As an example, hall-effect sensors mounted on the cylindrical receptacles **(5, 6),** along with magnets mounted within the cylindrical bars **(3, 4)** on the wings **(2a, 2b),** can be used to detect the presence of the wings **(2a, 2b)** within the central body **(1).** This information can be used by the aircraft's controller to prevent flight if the wings **(2a, 2b)** are not attached properly. In an alternate embodiment, several magnets and several sensors can be mounted within the cylindrical bars and the central body **(1),** respectively. The presence of only one or several magnets can be used to detect different types or configurations of wings **(2a, 2b).** Other types of identification and sensing may also be used to detect the presence and type of wing **(2a, 2b)** that is attached. Examples include reflective tape on the wing **(2a, 2b)** detected by infrared proximity sensors in the central body **(1),** metallic parts in the wing **(2a, 2b)** detected by capacitive sensors in the central body **(1)** or a hard surface on the wing **(2a, 2b)** detected by mechanical switches in the central body **(1).** These identification elements and sensors can be integrated either within the attachment mechanism **(3-6)** or the torque coupling mechanism **(7-8).**

The second part of the connection set is the coupling mechanism **(7-8)** that has two parts. In this embodiment the first part **(7)** of the torque coupling mechanism **(7-8)** takes the form of a reinforcement of the edge such as a male connection piece **(7)** mounted to the edge of the control surface **(9)** of the wing **(2a, 2b)** and the second part takes the form of a female connection piece **(8)** attached directly to the servo-motor **(10).** By "edge", we understand the lateral edge of the wing that allows the transmission of the torsion force to the entire control surface. FIG. 1b illustrated the aircraft with its wings **(2a, 2b)** attached to the central body **(1).** The attachment mechanism **(3-6)** is hidden within the central body **(1),** whereas the torque coupling mechanism **(7-8)** is seen in its engaged position. The axis of the servo-motor **(10)** is aligned with the hinge **(11)** of the control surface **(9)** when the torque coupling mechanism is engaged, so that the angle of the control surface is in a one-to-one relationship with the rotation angle of the servo-motor through the first and second parts of the torque coupling mechanism. It is to be noted that the first part (7) can be the lateral edge of the control surface (9) as long as the stiffness of the control surface allows the transmission of the torque from the servo-motor (10).

FIG. 3 illustrates an exploded view of the torque coupling mechanism between the servo-motor in the central body **(1)** and the control surface of the wing **(2a, 2b).** A female connector **(8)** with two walls is connected to the servo-motor **(10)** and mates with the male connector **(7)** mounted on the control surface **(9).** The male connector **(7)** fits tightly within the walls of the female connector **(8).** When the servo-motor **(10)** is rotated the torque is transferred directly to the control surface **(11)** through the walls of the female connector **(8)** that press against the male connector **(7).** One advantage of this torque coupling mechanism **(7-8)** is that it automatically aligns the axis of the control surface **(7)** with that of the servo-motor **(10)** during attachment of the wing **(2a, 2b).** A second advantage is that there is no fixed fastening point between the two connectors **(7-8),** and thus they come apart easily without damaging the servo-motor **(10)** within the central body **(1)** in case of a crash that impacts on the wing **(2a, 2b).**

In this embodiment a failsafe mechanical extrusion on the female connector **(8)** slides into a slot in the male connector **(7)** during attachment. This failsafe prevents the wing **(2a, 2b)** from being mounted upside-down, on the wrong side of the central body **(1)** or otherwise incorrectly. A similar failsafe extrusion and slot is also present on the male **(7)** and female **(8)** connector, respectively.

In an alternate embodiment, magnets can be embedded within both the male **(7)** and female **(8)** connection pieces to mate the servo-motor **(10)** to the control surface **(10).** Magnets also have the advantage of coming apart without damaging the servo-motor **(10)** in case of a crash that causes the wing **(2a, 2b)** to be torn off.

In an alternate embodiment, the first part **(7)** of the torque coupling mechanism **(7-8)** is the edge of the wing **(2a, 2b)** itself, which acts as the male connector that slides inside the second part of the torque coupling mechanism **(7-8)** which takes the form of a female connector.

One main feature of this connection set is the engagement and disengagement motion, which occurs in a single motion. The wing **(2a, 2b)** is attached to the central body **(1)** by sliding the cylindrical bars into the cylindrical receptacles within the central body **(1).** As the wings **(2a, 2b)** are inserted, the male **(7)** and female **(8)** parts of the torque coupling mechanism are automatically aligned facing each other, and are engaged in the same motion as the attachment of the wing **(2a, 2b).**

It should be noted that this is the preferred embodiment of the invention and has been made by way of illustration, not limitation. All modifications, alterations and changes coming within the scope of the present invention are herein meant to be included.

## Claims

1. An aircraft including a central body (1), at least a wing (2a, 2b) and a connection set to attach the wing to the central body, said wing comprising a lifting surface and a control surface (9) connected together by a hinge, said central body comprising at least a servo-motor (10) to actuate the control surface of the wing, said connection set comprising:
an attachment mechanism (3, 4, 5, 6) between the wing (2a, 2b) and the central body (1); and
a torque coupling mechanism (7, 8), wherein the torque coupling mechanism (7, 8) comprises a first part which is the edge or a reinforcement (7) of the edge of the wing, and a second part (8), mounted to the servo-motor of the central body so that the tilt angle of the control surface is in a one-to-one relationship with the rotation angle of the servo-motor, the first part and the second part being slidably engaged together while the wing is attached to the central body so that the first part remains detachable from the second part,
the axis of the servo-motor is aligned with the hinge of the control surface when the torque coupling mechanism is engaged, so that the control surface is directly actuated by the servo-motor through the first and second parts of the torque coupling mechanism; **characterized in that** the wing comprises bars (3, 4) and the central body (1) comprises receptacles (5, 6) for the bars, the attachment between the wing and the central body been made by sliding the bars into the receptacles.

2. The aircraft according to claim 1 wherein:
both attachment and torque coupling mechanisms of said connection set are slidably engaged and disengaged in a single motion.

3. The aircraft according to any of the claims 1 or 2 wherein:
said first part of the connection set is mechanically incompatible with a second part of another connection set connecting a second wing of the aircraft.

4. The aircraft according to any of the claims 1 to 3 wherein:
said connection set comprises a means of identification and said central body comprises means to read the identification of the attachment mechanism.

5. The aircraft according to claim 4 further comprising of:
said identification means allow to distinguish different types of wings as well as their presence and correct engagement.

## Patentansprüche

1. Flugzeug mit einem Mittelteil (1), mindestens einem Flügel (2a, 2b) und einem Verbindungssatz, um den Flügel an dem Mittelteil anzubringen, der Flügel umfasst eine Hebefläche und eine Steuerfläche, (9) die durch ein Gelenk miteinander verbunden sind, der Mittelteil umfasst mindestens einen Stellmotor (10), um die Steuerfläche des Flügels zu betätigen, der Verbindungssatz umfasst folgendes:
einen Befestigungsmechanismus (3, 4, 5, 6) zwischen dem Flügel (2a, 2b) und dem Mittelteil (1); und
einen Momentenkopplungs-Mechanismus (7, 8), der ein erstes Teil umfasst, das die Kante oder eine Verstärkung (7) der Kante des Flügels ist, und ein zweites Teil (8), das an den Stellmotor des Mittelteils montiert ist, so dass der Neigungswinkel der Steuerfläche in einem Eins-zu-eins-Verhältnis mit dem Drehwinkel des Stellmotors steht, das erste Teil und das zweite Teil sind in Gleiteingriff zusammen, während der Flügel an dem Mittelteil befestigt ist, so dass das erste Teil von dem zweiten Teil entfernbar bleibt, die Achse des Stellmotors ist mit dem Gelenk der Steuerfläche ausgerichtet, wenn der Momentenkopplungs-Mechanismus in Eingriff steht, so dass die Steuerfläche direkt von dem Stellmotor durch das erste und zweite Teil des Momentenkopplungs-Mechanismus betätigt wird;
**gekennzeichnet dadurch, dass** der Flügel Stangen (3, 4) umfasst und der Mittelteil (1) Behälter (5, 6) für die Stangen umfasst, die Befestigung zwischen dem Flügel und dem Mittelteil wird hergestellt, indem die Stangen in die Behälter gleiten.

2. Flugzeug nach Anspruch 1, wobei:
sowohl die Befestigung als auch die Momentenkopplungs- Mechanismen des Verbindungssatzes in einer einzigen Bewegung in Gleiteingriff und außer Eingriff gebracht werden.

3. Flugzeug nach einem beliebigen der Ansprüche 1 oder 2, wobei:
besagter erster Teil des Verbindungssatzes mechanisch inkompatibel mit einem zweiten Teil eines anderen Verbindungssatzes ist, der einen zweiten Flügel des Flugzeugs verbindet.

4. Flugzeug nach einem beliebigen der Ansprüche 1 bis 3, wobei:
besagte Verbindungssatz ein Identifizierungsmittel umfasst und das Mittelteil Mittel zum Lesen der Identifizierung des Befestigungsmechanismus umfasst.

5. Flugzeug nach Anspruch 4, das des Weiteren folgendes umfasst:
Identifizierungsmittel, die es gestatten, verschiedene Arten von Flügeln zu unterscheiden sowie ihre Präsenz und den richtigen Eingriff.

## Revendications

1. Avion comprenant un corps central (1), au moins une aile (2a, 2b) et un ensemble de liaison pour attacher l'aile au corps central, ladite aile comprenant une surface de soulèvement et une surface de commande (9) reliées entre elles par une charnière, ledit corps central comprenant au moins un servomoteur (10) pour actionner la surface de commande de l'aile, ledit ensemble de connexion comprenant:
un mécanisme de fixation (3, 4, 5, 6) entre l'aile (2a, 2b) et le corps central (1); et
un mécanisme de transmission de couple (7, 8), dans lequel le mécanisme de transmission de couple (7, 8) comprend une première partie qui est le bord ou une armature (7) du bord de l'aile, et une seconde partie (8), monté sur le servomoteur du corps central de sorte que l'angle d'inclinaison de la surface de commande soit en relation biunivoque avec l'angle de rotation du servomoteur, la première partie et la seconde partie étant engagées de manière coulissante l'une avec l'autre lorsque l'aile est fixée au corps central de sorte que la première partie reste détachable de la seconde partie,
l'axe du servomoteur est aligné avec la charnière de la surface de commande lorsque le mécanisme de transmission de couple est engagé, de sorte que la surface de commande est directement actionnée par le servomoteur à travers les première et seconde parties du mécanisme de transmission de couple;
**caractérisé en ce que** l'aile comprend des barres (3, 4) et le corps central (1) comprend des logements (5, 6) pour les barres, la fixation entre l'aile et le corps central étant réalisée en glissant les barres dans les réceptacles.

2. Avion selon la revendication 1, dans lequel:
les deux mécanismes de fixation et de transmission de couple dudit ensemble de connexion sont engagés de manière coulissante et désengagés dans un seul mouvement.

3. Avion selon l'une quelconque des revendications 1 ou 2, dans lequel:
ladite première partie de l'ensemble de liaison est mécaniquement incompatible avec une seconde partie d'un autre ensemble de connexion reliant une seconde aile de l'aéronef.

4. Avion selon l'une quelconque des revendications 1 à 3, dans lequel:
ledit ensemble de liaison comprend un moyen d'identification et ledit corps central comprend des moyens pour lire l'identification du mécanisme de fixation.

5. Avion selon la revendication 4 comprenant en outre:
lesdits moyens d'identification permettent de distinguer différents types d'ailes ainsi que leur présence et leur engagement correct.
